# EUROPÄISCHE PATENTSCHRIFT

(11) **EP 2 567 128 B1**
(45) Veröffentlichungstag und Bekanntmachung des Hinweises auf die Patenterteilung: **11.06.2014**
(21) Anmeldenummer: 11717592.7
(22) Anmeldetag: 28.04.2011
(51) Int. Cl.: F16K 11/048, D06F 58/22, D06F 58/24

(54) **VENTIL, HAUSGERÄT UND VERFAHREN ZUM BETREIBEN EINES VENTILS**
VALVE, DOMESTIC APPLIANCE AND METHOD FOR OPERATING A VALVE
SOUPAPE, APPAREIL MENAGER ET PROCEDE POUR FAIRE FONCTIONNER UNE SOUPAPE

(30) Priorität: 05.05.2010 DE 102010028619
(43) Veröffentlichungstag der Anmeldung: 13.03.2013
(73) Patentinhaber: BSH Bosch und Siemens Hausgeräte GmbH, 81739 München (DE)
(72) Erfinder: MOSEBACH, Carsten, 55118 Mainz (DE); WUTTGE, Oliver, 12157 Berlin (DE)
(86) Internationale Anmeldenummer: PCT/EP2011/056733
(87) Internationale Veröffentlichungsnummer: WO 2011/138222

(56) Entgegenhaltungen:
- EP-A1- 0 476 546
- DE-A1- 3 030 447
- DE-A1- 3 738 031
- DE-A1- 19 943 125
- DE-A1-102007 052 835
- DE-C1- 4 333 901
- US-A- 4 806 258
- US-A1- 2008 169 443

## Beschreibung

Die Erfindung betrifft ein Ventil, aufweisend
- eine Ventilkammer mit einem Einlauf, einem ersten Ablauf und einem zweiten Ablauf,
- ein in der Ventilkammer beweglich untergebrachtes Filterelement, welches mindestens wahlweise eine Filterstellung oder eine Selbstreinigungsstellung einnehmen kann,
- wobei in der Filterstellung die Ventilkammer von dem Einlauf durch das Filterelement zu dem ersten Ablauf durchströmbar ist und das Filterelement von einer ersten Seite aus durchströmbar ist und
- in der Selbstreinigungsstellung die Ventilkammer von dem Einlauf durch das Filterelement zu dem zweiten Ablauf durchströmbar ist und das Filterelement von einer zweiten Seite aus durchströmbar ist.

Die Erfindung betrifft außerdem ein Hausgerät, insbesondere Wäschetrocknungsgerät, mit mindestens einem solchen Ventil und ein Verfahren zum Betreiben eines Ventils.

Ein Ventil der eingangs beschriebenen Gattung ist jeweils offenbart in jeder der Schriften EP 0 476 546 A12, US 2008/0169443 A1, DE 30 30 447 A1 und US-Patent 4,806,258. Ofenbart ist dort jeweils ein Ventil zum Einfügen in eine Flüssigkeitsteitung, welches einen drehbaren Ventilkörper aufweist, in welchen ein Filter integriert ist. Durch geeignetes Verstellen dieses Ventilkörpers kann der Filter von abgelagerten Stoffen befreit werden, wobei er von Flüssigkeit entgegen einer Richtung durchströmt wird, in welcher er normalerweise durchströmt wird, wenn der Ventilkörper in einer Normalstellung ist.

Allgemein sind Wäschetrocknungsgeräte mit einem geschlossenen Prozessluftkreis bekannt, die einen mit dem Prozessluftkreis gekoppelten Wärmetauscher aufweisen, wobei der Wärmetauscher zum Abkühlen und Kondensieren von aus einer Wäschetrommel abgeführter feucht-warmer Prozessluft dient. Der Wärmetauscher kann ein Luft-Luft-Wärmetauscher oder ein Wärmetauscher einer Wärmepumpe sein.

Beispielsweise beschreibt WO 2008/119611 A1 ein Verfahren und eine Spülvorrichtung zum Reinigen eines Bauteils, insbesondere eines Verdampfers eines mit einer Kondensatoreinrichtung versehenen Wärmetauschers, sowie Wasch- oder Wäschetrockner mit einer solchen Vorrichtung. Zum Reinigen des innerhalb des Prozessluftkreislaufes angeordneten Bauteiles wird dazu Kondensatwasser, welches in dem Prozessluftkreislauf aus dem Trocknen von feuchter Wäsche gewonnen und in einer Kondensatwasserwanne aufgefangen wird, zu einem oberhalb des Verdampfers vorgesehenen Spülbehälter hin geleitet und durch dessen schlagartiges Öffnen auf der Austrittsseite als Wasserschwall an das betreffende Bauteil abgegeben. Insbesondere können mit der Spülvorrichtung Flusen und andere von einer Wäsche abgegebene Teilchen abgereinigt werden.

Das dann stark flusenbehaftete Wasser gelangt nach dem Spülvorgang wieder in den Kondensatwasserbehälter. An einem Eingang des Kondensatwasserbehälters werden die Flusen bisher üblicherweise durch ein Sieb aufgefangen. Zur Entfernung der Flusen aus dem Sieb kann der Kondensatwasserbehälter aus dem Wäschetrocknungsgerät entnommen und über einer Sieböffnung entleert werden, wodurch die Flusen mit dem Kondensatwasser herausgespült werden. Jedoch ist eine solche Entfernung der Flusen für einen Nutzer lästig und wird häufig vergessen, so dass eine Spülwirkung nachlassen kann oder es sogar zu einem Überlauf des Kondensatwasserbehälters kommen kann. Bei einigen Wäschetrocknungsgeräten kann der Kondensatwasserbehälter auch selbsttätig abgepumpt werden.

Es ist die Aufgabe der Erfindung, eine effektive Entsorgung von Flusen oder anderen Teilchen aus dem Wäschetrocknungsgerät zu erleichtern.

Diese Aufgabe wird mittels eines Ventils, eines Hausgeräts und eines Verfahrens zum Betreiben eines Ventils nach dem jeweiligen unabhängigen Anspruch gelöst. Bevorzugte Ausführungsformen sind insbesondere den abhängigen Ansprüchen entnehmbar.

Das erfindungsgemäße Ventil weist demnach auf:
- eine Ventilkammer mit einem Einlauf, einem ersten Ablauf und einem zweiten Ablauf,
- ein in der Ventilkammer beweglich untergebrachtes Filterelement, welches mindestens wahlweise eine Filterstellung oder eine Selbstreinigungsstellung einnehmen kann,
- wobei in der Filterstellung die Ventilkammer von dem Einlauf durch das Filterelement zu dem ersten Ablauf durchströmbar ist und das Filterelement von einer ersten Seite aus durchströmbar ist und
- in der Selbstreinigungsstellung die Ventilkammer von dem Einlauf durch das Filterelement zu dem zweiten Ablauf durchströmbar ist und das Filterelement von einer zweiten Seite aus durchströmbar ist;
des Weiteren ist:
das Filterelement zwischen einer ersten in der Ventilkammer beweglichen Dichtplatte und einer zweiten in der Ventilkammer beweglichen Dichtplatte angeordnet, wobei
   - in der Filterstellung die zweite Dichtplatte den zweiten Ablauf verschließt und
   - in der Selbstreinigungsstellung die erste Dichtplatte den ersten Ablauf verschließt.

Durch den oben genannten Aufbau kann in der Filterstellung durch den Einlass in die Ventilkammer geleitete Flüssigkeit, z.B. flusenbehaftetes Kondensatwasser, von einer Seite aus durch das Filterelement geleitet werden, wodurch sich Flusen und andere in der Flüssigkeit befindliche Schwebeteilchen an einer (einlaufseitigen) Seite des Filterelements ablagern. Hinter dem Filterelement (d.h. ablaufseitig) und damit auch an dem ersten Ablauf ist die Flüssigkeit gereinigt. In der Selbstreinigungsstellung fließt die Flüssigkeit von dem Einlauf durch das Filterelement zu dem zweiten Ablauf, und zwar bezüglich des Filterelements in umgekehrter Richtung. Dadurch befinden sich in der Selbstreinigungsstellung die in der Fifterstellung abgesetzten Flusen auf der ablaufseitigen Seite des Filterelements. Die Flusen können daher mittels der Flüssigkeitsströmung durch das Filterelement abgelöst und durch den zweiten Ablauf abgeführt werden. In den beiden Stellungen des Ventils kann somit das Filterelement von unterschiedlichen Seiten aus durchströmt werden, wodurch in einer Stellung abgelagerte Flusen usw. in der anderen Stellung abgelöst werden können.

Das Ventil kann somit einerseits in der Filterstellung effektiv Flusen und andere Schwebstoffe aus einer Flüssigkeit zurückhalten und andererseits in der Selbstreinigungsstellung die zurückgehaltenen Flusen auf einfache Weise ablösen und zur Entsorgung ausgeben, z.B. in ein Abflussrohr leiten. Ein Nutzer braucht die Flusen also nicht mehr manuell zu entsorgen, was ihm die Entsorgung erleichtert. Zudem ist der Aufbau kompakt und für Störungen unanfällig.

Erfindungsgemäß kann auf gesonderte Absperrventile an den Abläufen verzichtet werden und auf eine besonders einfache Weise sichergestellt werden, dass in der Filterstellung die Flüssigkeit nicht durch den zweiten Ablauf gelangt und in der Selbstreinigungsstellung die Flüssigkeit nicht durch den ersten Ablauf gelangt.

Das Filterelement kann als ein Filtermedium beispielsweise ein Sieb, Fifterschaum, Gaze, Vlies oder eine gelochte Folie aufweisen.

Für eine besonders einfach aufgebaute und robuste Umschaltung einer Strömungsrichtung durch das Filterelement kann es dann vorteilhaft sein, dass das Filterelement in der Filterstellung zwischen dem Einlauf und dem ersten Ablauf angeordnet ist, in der Selbstreinigungsstellung zwischen dem Einlauf und dem zweiten Ablauf angeordnet ist und für einen Wechsel zwischen der Filterstellung und der Selbstreinigungsstellung in der Ventilkammer bewegbar ist. So kann auf eine komplizierte Strömungsführung verzichtet werden, vielmehr reicht eine einfache Bewegung, insbesondere Verschiebung, des Filterelement aus.

Eine besonders einfache Umschaltung zwischen der Filterstellung und der Selbstreinigungsstellung kann vorteilhafterweise dadurch erreicht werden, dass die erste Dichtplatte, das Filterelement und die zweite Dichtplatte zueinander im Wesentlichen starr angeordnet sind. Diese drei Elemente können dann nämlich gemeinsam bewegt werden.

Zur einfachen und preiswerten Vermeidung von parasitären Flüssigkeitsströmungen an dem Filterelement und / oder der Dichtscheibe vorbei kann es vorteilhaft sein, dass (a) in der Filterstellung das Filterelement gegen ein Ventilgehäuse der Ventilkammer mittels mindestens eines ersten Dichtelements abgedichtet ist und die zweite Dichtplatte gegen das Ventilgehäuse mittels mindestens eines zweiten Dichtelements abgedichtet ist und (b) in der Selbstreinigungsstellung das Filterelement gegen das Ventilgehäuse mittels des mindestens einen zweiten Dichtelements abgedichtet ist und die erste Dichtplatte gegen das Ventilgehäuse mittels des mindestens einen ersten Dichtelements abgedichtet ist. Dadurch kann eine Abdichtung mit lediglich zwei Dichtelementen oder Gruppen von Dichtelementen erreicht werden.

Für einen sicheren Sitz des Filterelements und / oder der Dichtplatten in der Filterstellung kann es vorteilhaft sein, dass das Ventil mindestens ein Federelement aufweist, welches die erste Dichtplatte, das Filterelement und die zweite Dichtplatte in die Filterstellung drückt. Das Federelement kann beispielsweise eine Spiralfeder sein.

Grundsätzlich ist die Art und Weise, wie das Ventil zwischen der Filterstellung und der Selbstreinigungsstellung umgeschaltet werden kann, nicht beschränkt. Es kann jedoch insbesondere vorteilhaft sein, dass das Ventil eine Betätigungseinheit in Form eines Stellelements aufweist, welches dazu ausgestaltet ist, das Ventil zwischen der Filterstellung und der Selbstreinigungsstellung umzuschalten. Das Stellelement kann bevorzugt mit einem Aktor ausgerüstet sein, welcher ein elektrisches Signal in eine Hubbewegung zur Verschiebung zumindest des Filterelements zumindest in eine Richtung umwandeln kann. Der Aktor kann vorteilhafterweise einen Hubmagneten aufweisen, da ein Hubmagnet preiswert ist und sich schnell schalten lässt. Alternativ können aber auch andere Arten von Aktoren verwendet werden, wie ein Piezoaktor oder ein Thermoaktor. Der Aktor kann vorzugsweise außerhalb der Ventilkammer angeordnet sein, da er dann nicht gegen die Flüssigkeit abgedichtet zu werden braucht. Zur Übertragung einer Hubbewegung des Aktors auf das Filterelement und / oder die Dichtplatten kann ein Kraftübertragungselement vorgesehen sein. Das Kraftübertragungselement kann beispielsweise einen mit dem Aktor verbundenen Stößel und / oder einen mit dem Filterelement oder der Dichtscheibe verbundenen Vorsprung, z.B. Stift, umfassen.

Zur Vermeidung einer Leckage aus der Ventilkammer insbesondere in einem Bereich der Kraftübertragung kann das Ventil vorteilhafterweise ferner ein flexibles Abdichtelement zur Abdichtung der Ventilkammer gegen die Betätigungseinheit aufweisen. Das flexible Abdichtelement kann z.B. als eine flexible Membran oder als ein Dichtbalg vorliegen. Das Abdichtelement kann insbesondere an einer Gehäusewand der Ventilkammer dichtend angebracht sein und eine Durchführungsöffnung zur dichten Durchführung des Kraftübertragungselements aufweisen. Bei einer Betätigung des Aktors kann sich das Abdichtelement so verformen, z.B. dehnen, dass es die Hubbewegung des Aktors nicht wesentlich behindert. Eine Dichtigkeit des Abdichtelements wird dadurch sichergestellt, dass es bei einer Betätigung des Aktors nicht gegen die damit verbundenen Elemente verschoben wird, sondern die Dichtungsbereiche unverändert bleiben.

Bevorzugt bewegt das Stellelement bei seiner Betätigung die erste Dichtplatte, das Filterelement und die zweite Dichtplatte gegen das mindestens eine Federelement in die Selbstreinigungsstellung. Ohne eine Betätigung des Stellelements befindet sich somit das Ventil in der Filterstellung, in welcher z.B. ein Wäschetrocknungsgerät normal betreibbar ist.

Die Aufgabe wird auch mittels eines Hausgeräts gelöst, das mindestens ein solches Ventil aufweist.

Das Ventil kann beispielsweise vorteilhaft einsetzbar sein, falls das Hausgerät als ein Wäschetrocknungsgerät (insbesondere Wäschetrockner oder Waschtrockner) ausgestaltet ist, wobei der Einlauf mit einem Auffangbehälter für Kondensatwasser fluidisch verbunden sein kann. Dadurch können mittels des Ventils einerseits dem Wäschetrocknungsgerät gereinigtes Wasser zu Verfügung gestellt werden und andererseits zurückgehaltene Flusen auf einfache Weise automatisch aus dem Ventil entfernt werden.

Das Ventil ist besonders vorteilhaft einsetzbar, falls der erste Ablauf mit einer Spülvorrichtung des Wäschetrocknungsgeräts zum Abreinigen eines in einem Prozessluftkanal des Wäschetrocknungsgeräts angeordneten Bauteils (Verdampfer, Flusensieb usw.) verbunden ist und der zweite Ablauf mit einer Ablassvorrichtung des Wäschetrocknungsgeräts verbunden ist. Dadurch kann eine Verstopfung des Ventils verhindert werden, und die Flusen können automatisch aus dem Wäschetrocknungsgerät entfernt werden.

Die Aufgabe wird auch gelöst durch ein Verfahren zum Betreiben eines Ventils, welches aufweist:
- eine Ventilkammer mit einem Einlauf, einem ersten Ablauf und einem zweiten Ablauf,
- ein in der Ventilkammer beweglich untergebrachtes Filterelement, welches mindestens wahlweise eine Filterstellung oder eine Selbstreinigungsstellung einnehmen kann,
bei welchem Verfahren:
- in einer Filterstellung das Ventil mit einer Flüssigkeit so durchströmt wird, dass die Flüssigkeit das Filterelement von einer ersten Seite aus durchströmt und danach durch den ersten Ablauf austritt und
- in einer Selbstreinigungsstellung das Ventil mit der Flüssigkeit so durchströmt wird, dass die Flüssigkeit das Filterelement von einer zweiten Seite aus durchströmt und danach durch den zweiten Ablauf austritt,
- wobei bei einem Wechsel zwischen der Filterstellung und der Selbstreinigungsstellung das Filterelement in der Ventilkammer bewegt wird,
und wobei des Weiteren
- das Filterelement zwischen einer ersten in der Ventilkammer beweglichen Dichtplatte und einer zweiten in der Ventilkammer beweglichen Dichtplatte angeordnet ist, wobei
- in der Filterstellung die erste Dichtplatte bezüglich des Einlaufs hinter dem ersten Ablauf angeordnet ist und die zweite Dichtplatte zwischen dem Einlauf und dem zweiten Ablauf dichtend angeordnet ist,
- in der Selbstreinigungsstellung die erste Dichtplatte zwischen dem Einlauf und dem ersten Ablauf dichtend angeordnet ist und die zweite Dichtplatte bezüglich des Einlaufs hinter dem zweiten Ablauf angeordnet ist und
- bei einem Wechsel zwischen der Filterstellung und der Selbstreinigungsstellung die Dichtplatten zusammen mit dem Filterelement in der Ventilkammer bewegt werden.

Bei einem Wechsel zwischen der Filterstellung und der Selbstreinigungsstellung wird das Filterelement in der Ventilkammer bewegt. Auch hierbei können einerseits in der Filterstellung effektiv Flusen und andere Schwebstoffe aus einer Flüssigkeit zurückgehalten werden und andererseits in der Selbstreinigungsstellung die zurückgehaltenen Flusen auf einfache Weise abgelöst und zur Entsorgung ausgeben werden. Ein Nutzer braucht die Flusen also nicht mehr manuell zu entsorgen, was ihm die Entsorgung erleichtert. Außerdem ermöglicht dies einen besonders einfachen Aufbau und eine einfache und störunanfällige Betätigung.

In den folgenden Figuren wird die Erfindung anhand eines Ausführungsbeispiels schematisch genauer beschrieben.
- Fig.1: zeigt als teilweise Schnittdarstellung in Schrägansicht ein Ventil in einer Filterstellung;
- Fig.2: zeigt das Ventil in der Filterstellung als Schnittdarstellung in Seitenansicht;
- Fig.3: zeigt das erfindungsgemäße Ventil als teilweise Schnittdarstellung in Schrägansicht in einer Selbstreinigungsstellung;
- Fig.4: zeigt das Ventil in der Selbstreinigungsstellung als Schnittdarstellung in Seitenansicht;
- Fig.5: zeigt ein Wäschetrocknungsgerät mit dem Ventil.

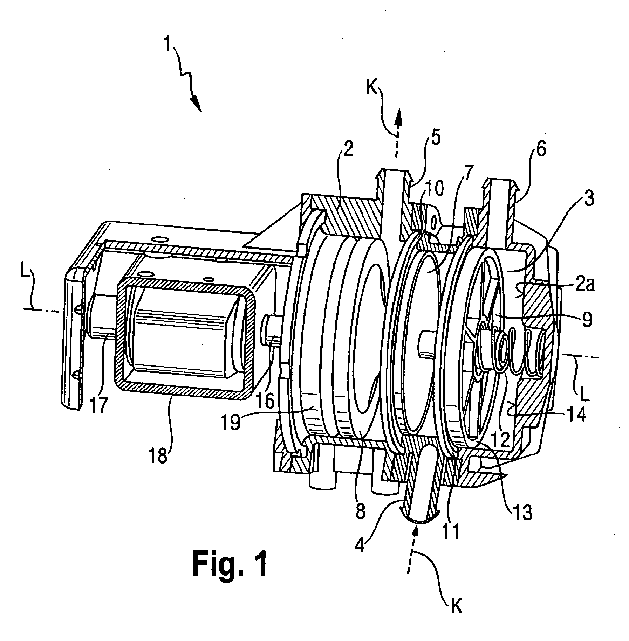

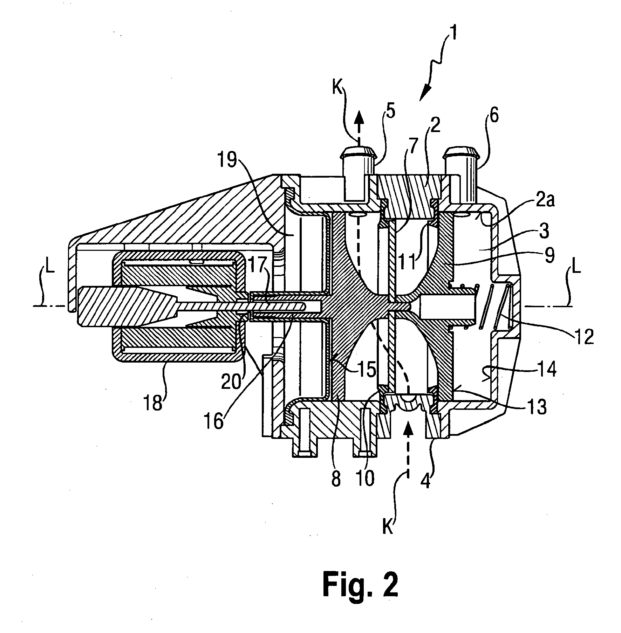

Fig.1 zeigt als teilweise Schnittdarstellung in Schrägansicht ein Ventil 1 in einer Filterstellung. Fig.2 zeigt das Ventil 1 ebenfalls in der Filterstellung, jedoch als Schnittdarstellung in Seitenansicht. Das Ventil 1 weist eine in einem Ventilgehäuse 2 vorhandene Ventilkammer 3 auf, welche durch eine Gehäusewand 2a des Ventilgehäuses 2 begrenzt wird. In die Ventilkammer 3 münden ein Einlauf 4 in Form eines untenliegenden Einlaufstutzens 4, ein erster Ablauf in Form eines ersten, untenliegenden Ablaufstutzens 5 und ein zweiter Ablauf in Form eines zweiten, untenliegenden Ablaufstutzens 6. Der Einlaufstutzen 4 einerseits und die beiden Ablaufstutzen 5,6 andererseits können bezüglich einer gemeinsamen Ebene leicht aus einer Vertikalen versetzt angeordnet werden, um einen Anschluss des Ventils 1 in einem Hausgerät zu erleichtern.

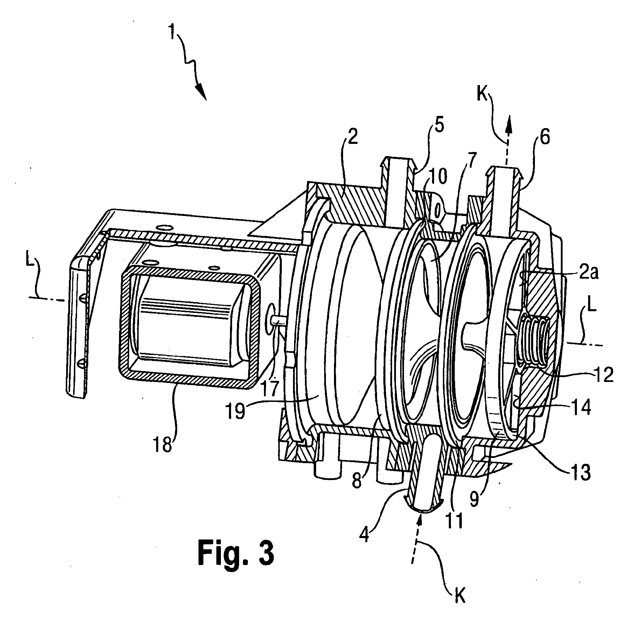

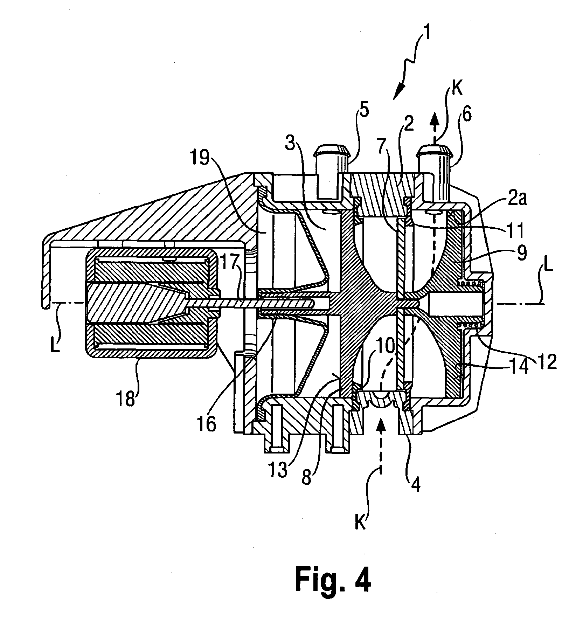

In der Ventilkammer 3 ist ein Filterelement in Form eines Flusensiebs 7 beweglich untergebracht. Das Flusensieb 7 kann mindestens wahlweise in die in Fig.1 und Fig.2 gezeigte Filterstellung oder in eine Selbstreinigungsstellung (siehe weiter unten in Fig.3 und Fig.4) gebracht werden. Zur Umschaltung wird das Flusensieb 7 in der Ventilkammer 3 verschoben. Dazu weist die Ventilkammer 3 eine zylinderförmige Grundform auf, und das hier scheibenförmige Flusensieb 7 weist eine dazu passende runde Randkontur auf, so dass das Filterelement 7 mit nur geringem Spiel senkrecht stehend entlang einer Längsachse L der Ventilkammer 3 verschoben werden kann. Die Ventilkammer 3 und das Filterelement 7 brauchen im allgemeinen Fall nicht zwangsläufig eine runde Randkontur aufzuweisen, besitzen aber eine zueinander kongruente Kontur.

In der Ventilkammer 3 befinden sich ferner ein erster Dichtkörper in Form einer ersten Dichtscheibe 8 und ein zweiter Dichtkörper in Form einer zweiten Dichtscheibe 9. Das Flusensieb 7 ist dabei jeweils beabstandet zwischen den beiden Dichtscheiben 8, 9 angeordnet. In der gezeigten Filterstellung verschließt die zweite Dichtscheibe 9 den zweiten Ablauf 6 gegen den Einlaufstutzen 4, während die erste Dichtscheibe 8 eine Strömung zwischen dem Einlaufstutzen 4 und dem ersten Ablaufstutzen 5 zulässt. Dazu befindet sich die zweite Dichtscheibe 9 zwischen dem Einlaufstutzen 4 und dem zweiten Ablaufstutzen 6 und sperrt dort die Ventilkammer 3 über ihren Querschnitt vollflächig ab. Damit das verunreinigte Kondensatwasser K die zweite Dichtscheibe 9 nicht über einen parasitären Umgehungsstrom ('Bypass' oder 'Flow-By') umgehen kann, liegt die zweite Dichtscheibe 9 an ihrem Randbereich an einer umlaufenden zweiten Dichtung 11 an, welche aus einer Wand der Ventilkammer 3 hervorsteht, und ist so gegen das Ventilgehäuse 2 abgedichtet. Die erste Dichtscheibe 8 befindet sich hingegen (bezüglich des Einlaufstutzens 4) hinter dem ersten Ablaufstutzen 5 und behindert so keine Strömung durch die Ventilkammer 3. In dieser Stellung braucht der erste Ablaufstutzen 5 auch nicht gegen das Ventilgehäuse 2 abgedichtet zu sein. Damit das verunreinigte Kondensatwasser K das Filterelement 7 nicht über einen parasitären Umgehungsstrom umgehen kann, liegt das Flusensieb 7 an einer umlaufenden Dichtung, welche aus der Wand der Ventilkammer 3 hervorsteht, nämlich an einer ersten Dichtung 10. Das Flusensieb 7, die erste Dichtscheibe 8 und die zweite Dichtscheibe 9 sind zueinander parallel ausgerichtet und starr zueinander angeordnet. Dadurch können diese drei Elemente 7, 8, 9 als eine Einheit entlang der Längsachse L bewegt werden. Im Einzelnen sind die erste Dichtscheibe 8 und die zweite Dichtscheibe 9 zusammengesteckt, wobei das Flusensieb 7 zwischen die erste Dichtscheibe 8 und die zweite Dichtscheibe 9 eingesetzt ist.

In der Filterstellung wird die zweite Dichtscheibe 9 mittels einer Spiralfeder 12 in Richtung des Einlaufs 4 und damit in Richtung des Flusensiebs 7 und der ersten Dichtscheibe 8 auf die zweite Dichtung 11 gedrückt. Dazu setzt die Spiralfeder 12 einerseits mittig an einer (bezüglich des Einlaufs 4) rückwärtigen Seite 13 der zweiten Dichtscheibe 9 an und andererseits an einer Stirnseite 14 der Ventilkammer 3. Die Spiralfeder 12 ist in dieser Anordnung dauernd druckvorgespannt. Durch die starre Verbindung zwischen der zweiten Dichtscheibe 9 und dem Flusensieb 7 drückt die Spiralfeder 12 auch das Flusensieb 7 gegen die erste Dichtung 10 und hält die erste Dichtscheibe 8 hinter dem ersten Ablaufstutzen 5.

Von einer Rückseite 15 der ersten Dichtscheibe 8, welche der Rückseite 13 der zweiten Dichtscheibe 9 entgegengesetzt ist, aus erstreckt sich ein stiftförmiger Vorsprung bzw. Stift 16 aus der Ventilkammer 3 heraus. An diesem Stift 16 kann ein Stößel 17 einer Betätigungsvorrichtung in Form eines Hubmagneten 18 ansetzen, wobei der Stößel 17 in der gezeigten Filterstellung in den Hubmagneten 18 eingezogen ist, da der Hubmagnet 18 nicht bestromt wird. Somit wird von dem Hubmagneten 18 keine Kraft über den Stößel 17 auf die erste Dichtscheibe 8 übertragen.

Zur sicheren Abdichtung der Ventilkammer 3 in einem Bereich der Kraftübertragung ist das Ventil 1 mit einem flexiblen Abdichtelement in Form einer flexiblen Membran 19 ausgerüstet. Die Membran 19 ist an dem Ventilgehäuse 2 dichtend angebracht und weist eine Durchführungsöffnung 20 zur dichten Durchführung des Stößels 17 auf. Dazu überdeckt die Membran 19 die Rückseite der ersten Dichtscheibe 8 und ist über den Stift 16 gezogen, so dass die Membran 19 in der gezeigten Filterstellung mit dem Stift 16 aus der Ventilkammer 3 herausgeführt ist.

In der Filterstellung kann eine Flüssigkeit, z.B. flusenbehaftetes Kondensatwasser K eines Wäschetrocknungsgeräts, durch den Einlaufstutzen 4 in die Ventilkammer 3 eingebracht werden. Da der Weg zu dem zweiten Ablaufstutzen 6 durch die zweite Dichtscheibe 9 blockiert ist, aber der Weg zu dem ersten Ablaufstutzen 5 offen ist, wird das flusenbehaftete Kondensatwasser K von dem Einlaufstutzen 4 durch die Ventilkammer 3 zu dem ersten Ablaufstutzen 5 fließen. Dazu muss das Kondensatwasser K durch das Flusensieb 7 strömen, und zwar hier von einer rechten Seite zu einer linken Seite. Ein möglicher Strömungsweg ist durch den gestrichelten Pfeil angedeutet. Folglich lagern sich die Flusen auf der rechten Seite des Flusensiebs ab, und das Kondensatwasser K ist (bezüglich einer Strömungsrichtung) hinter dem Flusensieb 7 gefiltert und dadurch weitgehend flusenfrei. Dieses flusenfreie Kondensatwasser K kann beispielsweise als Spülflüssigkeit in einem Wäschetrocknungsgerät verwendet werden.

Die in Fig.1 und Fig.2 gezeigte Filterstellung entspricht einer Ruhestellung des Ventils 1 und wird während nahezu eines gesamten Trocknungsablaufs eingenommen.

Beispielsweise können bei einem Wäschetrocknungsgerät u.a. zwei Situationen auftreten, bei denen die Ruhestellung verändert bzw. die Selbstreinigungsstellung eingenommen wird: (i) wenn das Kondensatwasser K und die auf dem Filterelement 7 abgeschiedenen Flusen automatisch aus dem Gerät gepumpt werden sollen und (ii) wenn so viel Kondensatwasser in Gerät dem Kondensatbehälter vorhanden ist, das ein maximal zulässiger Kondensatwasserfüllstand erreicht ist. Für diese Fälle wird der Hubmagnet 18 bestromt, wodurch das Ventil 1 in die Selbstreinigungsstellung verschoben wird, die im Folgenden genauer beschrieben wird.

Fig.3 zeigt als teilweise Schnittdarstellung in Schrägansicht das Ventil 1 in einer Selbstreinigungsstellung. Fig.4 zeigt Ventil 1 ebenfalls in der Selbstreinigungsstellung, jedoch als Schnittdarstellung in Seitenansicht.

Zum Übergang von der in Fig.1 und Fig.2 gezeigten Filterstellung in die Selbstreinigungsstellung wird der Hubmagnet 18 bestromt, wodurch der Stößel 17 die erste Dichtscheibe 8 mittels des Stifts 16 gegen die von der Spiralfeder 12 ausgeübte Federkraft in die Ventilkammer 7 drückt (in den Figuren nach rechts). Dabei werden: (a) die erste Dichtscheibe 8 über den zweiten Ablauf 5 geschoben, so dass sich die erste Dichtscheibe 8 nun zwischen dem Einlauf 4 und dem ersten Ablauf 5 befindet und den ersten Ablauf 5 gegen den Einlauf 4 abdichtet, (b) das Flusensieb 7 über den Einlauf 4 hinweg geschoben, so dass die aus dem Einlauf 4 einströmende Flüssigkeit nun in einer bezüglich der Filterstellung entgegengesetzten Richtung auf das Flusensieb 7 trifft und durch dieses strömt und (c) die zweite Dichtscheibe 9 aus ihrer Position zwischen dem Einlauf 4 und dem zweiten Ablauf 6 in eine Position hinter dem zweiten Ablauf 6 verschoben, wodurch der zweite Ablauf 6 freigegeben wird.

Bei einer Betätigung des Hubmagneten 18 kann sich die Membran 19 so verformen, z.B. dehnen, dass es die Hubbewegung des Hubmagneten 18 nicht wesentlich behindert. Eine Dichtigkeit der Membran 19 wird dadurch sichergestellt, dass sie bei einer Betätigung des Hubmagneten 18 nicht gegen das Ventilgehäuse 2 oder den Stift 16 verschoben wird.

In der Selbstreinigungsstellung kann das flusenbehaftete Kondensatwasser K durch den Einlaufstutzen 4 in die Ventilkammer 3 eingebracht werden. Da nun der Weg zu dem ersten Ablaufstutzen 5 durch die erste Dichtscheibe 8 blockiert ist, aber der Weg zu dem zweiten Ablaufstutzen 6 offen ist, wird das flusenbehaftete Kondensatwasser K von dem Einlaufstutzen 4 durch die Ventilkammer 3 zu dem zweiten Ablaufstutzen 6 fließen. Dazu strömt das Kondensatwasser K in zu der Filterstellung umgekehrten Richtung durch das Flusensieb 7, nämlich von der hier linken Seite zu der hier rechten Seite. Ein möglicher Strömungsweg ist durch den gestrichelten Pfeil angedeutet. Da die Flusen sich in der Filterstellung auf der rechten Seite des Flusensiebs abgelagert hatten, spült das Kondensatwasser K die Flusen von dem Flusensieb 7 ab und nimmt sie durch den zweiten Ablauf 6 mit. Dieses viele Flusen enthaltende Kondensatwasser K kann beispielsweise in eine Ablassvorrichtung des Wäschetrocknungsgeräts geleitet und weiter aus dem Wäschetrocknungsgeräts entsorgt werden, z.B. in einen Abflusskanal. Da die Selbstreinigungsstellung typischerweise nur für eine kurze Zeit aktiviert wird, ist die Menge der sich während der Selbstreinigüngsstellung an dem Flusensieb 7 ablagernden Flusen vernachlässigbar gering.

Wird die Bestromung des Hubmagneten 18 unterbrochen, drückt die Spiralfeder 12 das Flusensieb 7 und die beiden Dichtscheiben 8, 9 wieder in die in Fig.1 und Fig.2 gezeigte Filterstellung zurück.

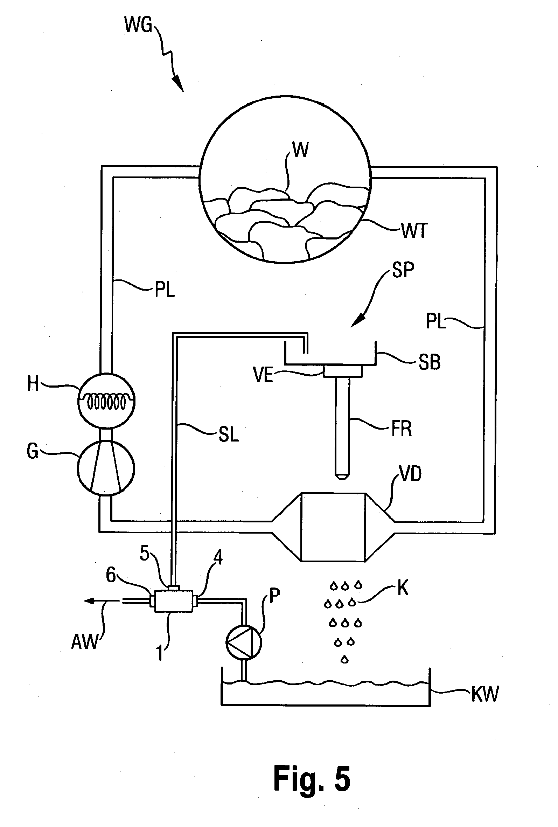

Fig.5 zeigt ein Wäschetrocknungsgerät in Form eines beispielhaften Wäschetrockners WG. Der Wäschetrockner WG weist einen geschlossenen Prozessluftkreis mit einer Wäschetrommel WT und einem beidseitig daran anschließenden Prozessluftkanal PL auf. In der Wäschetrommel WT wird Wäsche W von warmer und trockener Prozessluft überströmt, welche dabei Feuchtigkeit aus der Wäsche W aufnimmt. Die dann feucht-warme Prozessluft wird folgend aus der Wäschetrommel WT durch den Prozessluftkanal PL zu einem Verdampfer VD einer Wärmepumpe gesaugt und in dem Verdampfer VD abgekühlt. Dadurch kondensiert der in der Prozessluft enthaltene Wasserdampf aus und fließt als Kondensatwasser K in eine Kondensatwasserwanne KW. Die hinter dem Verdampfer VD kühl-trockene Prozessluft wird weiter von einem Gebläse G angesaugt und folgend durch eine Heizung H geblasen In der Heizung H wird die Prozessluft aufgeheizt und wieder als trocken-warme Luft in die Wäschetrommel WT geblasen.

In der Wäschetrommel WT nimmt die Prozessluft außer der Feuchtigkeit aus der Wäsche W auch Flusen auf, welche sich im folgenden Umlauf durch den Prozessluftkreislauf WT, PL teilweise an dem Verdampfer VD anlagern und dessen Wirkungsgrad herabsetzen und teilweise mit dem Kondensatwasser K in die Kondensatwasserwanne KW gelangen. Mit der Zeit lagern sich immer mehr Flusen in der Kondensatwasserwanne KW ab, so dass die Gefahr eines Überlaufens besteht. Falls eine Ablaufpumpe zum Abpumpen des Kondensatwassers K aus der Kondensatwasserwanne KW in einen Abwasserkanal AW vorvorhanden ist, kann diese durch die Flusen verstopfen. Daher muss die herkömmliche Kondensatwasserwanne KW regelmäßig von Flusen gereinigt werden.

Für eine Reinigung des Verdampfers kann eine Spüleinrichtung SP vorgesehen sein, welche mittels einer Pumpe P das Kondensatwasser K durch eine Steigleitung SL in einen Spülbehälter SB hochpumpen kann, in dem es zunächst gesammelt und bei Bedarf durch Öffnen eines Ventils VE schwallartig durch ein Fallrohr FR auf den Verdampfer VD abgelassen wird. Dadurch können Kühllamellen in dem Verdampfer VD mit Kondensatwasser K hoher Geschwindigkeit überströmt und so mitgerissen werden. So wird der Verdampfer von den Flusen befreit. Das flusenbehaftete Kondensatwasser K wird danach wieder in die Kondensatwasserwanne KW geleitet. Bei herkömmlichen Wäschetrocknern tritt das Problem auf, dass eine Reinigung des Verdampfers VD mit dem flusenbehafteten Kondensatwasser K eine nur beschränkte Reinigungswirkung ergibt, da die Flusen des aus dem Spülbehälter abgelassenen Kondensatwassers K sich an dem Verdampfer ablagern können.

Bei dem erfindungsgemäßen Wäschetrocknungsgerät WG jedoch wird das flusenbehaftete Kondensatwasser K aus der Kondensatwasserwanne KW durch das Ventil 1 gepumpt, wo es, wie in Fig.1 bis Fig.4 beschrieben, dazu dient, das an dem Einlauf 4 einströmende Kondensatwasser K in der Filterstellung als gereinigtes Kondensatwasser K durch den ersten Ablauf 5 in den Spülbehälter SB weiterzuleiten und in der Selbstreinigungsstellung den zweiten Ablauf 5 mit den in dem Ventil 1 abgelagerten Flusen in den Abwasserkanal AW zu leiten. Dadurch kann der Verdampfer VD besser gereinigt werden. Auch braucht die Kondensatwasserwanne nicht mehr manuell von Flusengereinigt zu werden. Das Ventil 1 kann beispielsweise mittels einer hier nicht gezeigten Steuereinheit automatisch betätigt werden und / oder durch eine Nutzerinteraktion, z.B. zum Aktivieren einer Selbstreinigungsfunktion des Wäschetrockners W.

Selbstverständlich ist die vorliegende Erfindung nicht auf das gezeigte Ausführungsbeispiel beschränkt.

### Bezugszeichenliste

- 1: Ventil
- 2: Ventilgehäuse
- 2a: Gehäusewand
- 3: Ventilkammer
- 4: Einlaufstutzen
- 5: erster Ablaufstutzen
- 6: zweiter Ablaufstutzen
- 7: Flusensieb
- 8: erste Dichtscheibe
- 9: zweite Dichtscheibe
- 10: erste Dichtung
- 11: zweite Dichtung
- 12: Spiralfeder
- 13: rückwärtige Seite der zweiten Dichtscheibe
- 14: Stirnseite
- 15: Rückseite der ersten Dichtscheibe
- 16: Stift
- 17: Stößel
- 18: Hubmagnet
- 19: Membran
- AW: Abwasserkanal
- FR: Fallrohr
- G: Gebläse
- H: Heizung
- K: Kondensatwasser
- KW: Kondensatwasserwanne
- L: Längsachse
- PL: Prozessluftkanal
- SB: Spülbehälter
- SP: Spülvorrichtung
- W: Wäsche
- WG: Wäschetrockner
- WT: Wäschetrommel
- VE: Ventil
- VD: Verdampfer

## Patentansprüche

1. Ventil (1), aufweisend
- eine Ventilkammer (3) mit einem Einlauf (4), einem ersten Ablauf (5) und einem zweiten Ablauf (6),
- ein in der Ventilkammer (3) beweglich untergebrachtes Filterelement (7), welches mindestens wahlweise eine Filterstellung oder eine Selbstreinigungsstellung einnehmen kann,
- wobei in der Filterstellung die Ventilkammer (3) von dem Einlauf (4) durch das Filterelement (7) zu dem ersten Ablauf durchströmbar ist und das Filterelement (7) von einer ersten Seite aus durchströmbar ist und
- in der Selbstreinigungsstellung die Ventilkammer (3) von dem Einlauf (4) durch das Filterelement (7) zu dem zweiten Ablauf (6) durchströmbar ist und das Filterelement (7) von einer zweiten Seite aus durchströmbar ist,
**dadurch gekennzeichnet, dass**
das Filterelement (7) zwischen einer ersten in der Ventilkammer (3) beweglichen Dichtplatte (8) und einer zweiten in der Ventilkammer (3) beweglichen Dichtplatte (9) angeordnet ist, wobei
- in der Filterstellung die zweite Dichtplatte (9) den zweiten Ablauf (6) verschließt und
- in der Selbstreinigungsstellung die erste Dichtplatte (8) den ersten Ablauf (5) verschließt.

2. Ventil (1) nach Anspruch 1, bei dem das Filterelement
- in der Filterstellung zwischen dem Einlauf (4) und dem ersten Ablauf (5) angeordnet ist,
- in der Selbstreinigungsstellung zwischen dem Einlauf (4) und dem zweiten Ablauf (6) angeordnet ist und
- für einen Wechsel zwischen der Filterstellung und der Selbstreinigungsstellung in der Ventilkammer (3) bewegbar ist.

3. Ventil (1) nach einem der vorhergehenden Ansprüche, bei dem die erste Dichtplatte (8), das Filterelement (7) und die zweite Dichtplatte (9) zueinander im Wesentlichen starr angeordnet sind.

4. Ventil (1) nach einem der vorhergehenden Ansprüche, bei dem
- in der Filterstellung das Filterelement (7) gegen ein Ventilgehäuse (2) der Ventilkammer (3) mittels mindestens eines ersten Dichtelements (10) abgedichtet ist und die zweite Dichtplatte (9) gegen das Ventilgehäuse (2) mittels mindestens eines zweiten Dichtelements (11) abgedichtet ist und
- in der Selbstreinigungsstellung das Filterelement (7) gegen das Ventilgehäuse (2) mittels des mindestens einen zweiten Dichtelements (11) abgedichtet ist und die erste Dichtplatte (8) gegen das Ventilgehäuse (2) mittels des mindestens einen ersten Dichtelements (10) abgedichtet ist.

5. Ventil (1) nach einem der vorhergehenden Ansprüche, aufweisend mindestens ein Federelement (12), welches die erste Dichtplatte (8), das Filterelement (7) und die zweite Dichtplatte (9) in die Filterstellung drückt.

6. Ventil (1) nach einem der vorhergehenden Ansprüche, aufweisend eine Betätigungseinheit (17,18), welche dazu ausgestaltet ist, das Ventil (1) zwischen der Filterstellung und der Selbstreinigungsstellung umzuschalten.

7. Ventil (1) nach den Ansprüchen 5 und 6, bei dem die Betätigungseinheit (17,18) bei ihrer Betätigung die erste Dichtplatte (8), das Filterelement (7) und die zweite Dichtplatte (9) gegen das mindestens eine Federelement (12) in die Selbstreinigungsstellung bewegt.

8. Ventil (1) nach einem der Ansprüche 6 und 7, ferner aufweisend ein flexibles Abdichtelement (19) zur Abdichtung der Ventilkammer (3) gegen die Betätigungseinheit (17,18).

9. Hausgerät (W), aufweisend mindestens ein Ventil (1) nach einem der vorhergehenden Ansprüche.

10. Hausgerät (WG) nach Anspruch 9, welches als ein Wäschetrocknungsgerät ausgestaltet ist, wobei der Einlauf (4) mit einem Auffangbehälter (KW) für Kondensatwasser (K) fluidisch verbunden ist.

11. Hausgerät (WG) nach einem der Ansprüche 9 und 10, bei dem der erste Ablauf (5) mit einer Spülvorrichtung (SP) zum Abreinigen eines in einem Prozessluftkanal (PL) des Wäschetrocknungsgeräts (WG) angeordneten Bauteils verbunden ist und der zweite Ablauf (6) mit einer Ablassvorrichtung (AW) des Wäschetrocknungsgeräts (W) verbunden ist.

12. Verfahren zum Betreiben eines Ventils (1), welches aufweist:
- eine Ventilkammer (3) mit einem Einlauf (4), einem ersten Ablauf (5) und einem zweiten Ablauf (6),
- ein in der Ventilkammer (3) beweglich untergebrachtes Filterelement (7), welches mindestens wahlweise eine Filterstellung oder eine Selbstreinigungsstellung einnehmen kann,
bei welchem Verfahren:
- in einer Filterstellung das Ventil (1) mit einer Flüssigkeit (K) so durchströmt wird, dass die Flüssigkeit (K) das Filterelement (7) von einer ersten Seite aus durchströmt und danach durch den ersten Ablauf (5) austritt und
- in einer Selbstreinigungsstellung das Ventil (1) mit der Flüssigkeit (K) so durchströmt wird, dass die Flüssigkeit (K) das Filterelement (7) von einer zweiten Seite aus durchströmt und danach durch den zweiten Ablauf (6) austritt,
- wobei bei einem Wechsel zwischen der Filterstellung und der Selbstreinigungsstellung das Filterelement (7) in der Ventilkammer (3) bewegt wird,
**dadurch gekennzeichnet, dass**
- das Filterelement (7) zwischen einer ersten in der Ventilkammer (3) beweglichen Dichtplatte (8) und einer zweiten in der Ventilkammer (3) beweglichen Dichtplatte (9) angeordnet ist, wobei
- in der Filterstellung die erste Dichtplatte (8) bezüglich des Einlaufs (4) hinter dem ersten Ablauf (5) angeordnet ist und die zweite Dichtplatte (9) zwischen dem Einlauf (4) und dem zweiten Ablauf (9) dichtend angeordnet ist,
- in der Selbstreinigungsstellung die erste Dichtplatte (8) zwischen dem Einlauf (4) und dem ersten Ablauf (5) dichtend angeordnet ist und die zweite Dichtplatte (9) bezüglich des Einlaufs (4) hinter dem zweiten Ablauf (6) angeordnet ist und
- bei einem Wechsel zwischen der Filterstellung und der Selbstreinigungsstellung die Dichtplatten (8,9) zusammen mit dem Filterelement (7) in der Ventilkammer (3) bewegt werden.

## Claims

1. Valve (1) comprising
- a valve chamber (3) with an inlet (4), a first outlet (5) and a second outlet (6),
- a filter element (7), which is housed in the valve chamber (3) to be movable and which can adopt at least selectably a filter setting or a self-cleaning setting,
- wherein in the filter setting the valve chamber (3) can be flowed through from the inlet (4) through the filter element (7) to the first outlet and the filter element (7) can be flowed through from a first side and
- in the self-cleaning setting the valve chamber (3) can be flowed through from the inlet (4) through the filter element (7) to the second outlet (6) and the filter element (7) can be flowed through from a second side,
**characterised in that**
the filter element (7) is arranged between a first sealing plate (8) movable in the valve chamber (3) and a second sealing plate (9) movable in the valve chamber (3), wherein
- in the filter setting the second sealing plate (9) closes the second outlet (6) and
- in the self-cleaning setting the first sealing plate (8) closes the first outlet (5).

2. Valve (1) according to claim 1, in which the filter element
- in the filter setting is arranged between the inlet (4) and the first outlet (5),
- in the self-cleaning setting is arranged between the inlet (4) and the second outlet (6) and
- is movable in the valve chamber (3) for a change between the filter setting and the self-cleaning setting.

3. Valve (1) according to one of the preceding claims, in which the first sealing plate (8), the filter element (7) and the second sealing plate (9) are arranged substantially rigidly with respect to one another.

4. Valve (1) according to any one of the preceding claims, in which
- in the filter setting the filter element (7) is sealed relative to a valve housing (2) of the valve chamber (3) by means of at least one first sealing element (10) and the second sealing plate (9) is sealed relative to the valve housing (2) by means of at least one second sealing element (11) and
- in the self-cleaning setting the filter element (7) is sealed relative to the valve housing (2) by means of at least one second sealing element (11) and the first sealing plate (8) is sealed relative to the valve housing (2) by means of the at least one first sealing element (10).

5. Valve (1) according to any one of the preceding claims, comprising at least one spring element (12) which presses the first sealing plate (8), the filter element (7) and the second sealing plate (9) into the filter setting.

6. Valve (1) according to any one of the preceding claims, comprising an actuating unit (17, 18) which is arranged for the purpose of switching over the valve (1) between the filter setting and the self-cleaning setting.

7. Valve (1) according to claims 5 and 6, in which the actuating unit (17, 18) when actuated moves the first sealing plate (8), the filter element (7) and the second sealing plate (9) relative to the at least one spring element (12) into the self-cleaning setting.

8. Valve (1) according to one of claims 6 and 7, further comprising a flexible sealing element (19) for sealing off the valve chamber (3) relative to the actuating unit (17, 18).

9. Domestic appliance (W) comprising at least one valve (1) according to any one of the preceding claims.

10. Domestic appliance (WG) according to claim 9, which is constructed as a laundry drying appliance, wherein the inlet (4) is in fluid connection with a collecting container (KW) for condensation water (K).

11. Domestic appliance (WG) according to one of claims 9 and 10, in which the first outlet (5) is connected with a rinsing device (SP) for cleaning a component arranged in a process air channel (PL) of the laundry drying appliance (WG) and the second outlet (6) is connected with an outflow device (AW) of the laundry drying appliance (W).

12. Method of operating a valve (1), comprising:
- a valve chamber (3) with an inlet (4), a first outlet (5) and a second outlet (6), and
- a filter element (7) which is housed in the valve chamber (3) to be movable and which can adopt at least selectably a filter setting or a self-cleaning setting,
in which method:
- in a filter setting the valve (1) is so flowed through by a liquid (K) that the liquid (K) flows through the filter element (7) from a first side and thereafter it exits through the first outlet (5) and
- in a self-cleaning setting the valve (1) is so flowed through by the liquid (K) that the liquid (K) flows through the filter element (7) from a second side and thereafter exits through the second outlet (6),
- wherein the filter element (7) is moved in the valve chamber (3) when a change between filter setting and the self-cleaning setting takes place,
**characterised in that**
- the filter element (7) is arranged between a first sealing plate (8) movable in the valve chamber (3) and a second sealing plate (9) movable in the valve chamber (3), wherein
- in the filter setting the first sealing plate (8) is arranged behind the first outlet (5) with respect to the inlet (4) and the second sealing plate (9) is sealingly arranged between the inlet (4) and the second outlet (9),
- in the self-cleaning setting the first sealing plate (8) is sealingly arranged between the inlet (4) and the first outlet (5) and the second sealing plate (9) is arranged behind the second outlet (6) with respect to the inlet (4) and
- the sealing plates (8, 9) are moved together with the filter element (7) in the filter chamber (3) when a change between the filter setting and the self-cleaning setting takes place.

## Revendications

1. Soupape (1), comprenant
- une chambre de soupape (3) dotée d'un orifice d'entrée (4), d'un premier orifice de sortie (5) et d'un deuxième orifice de sortie (6),
- un élément filtrant (7) logé de manière mobile dans la chambre de soupape (3), lequel peut adopter au moins, au choix, une position de filtrage ou une position d'auto-nettoyage,
- en position de filtrage, la chambre de soupape (3) pouvant être parcourue depuis l'orifice d'entrée (4) à travers l'élément filtrant (7) jusqu'au premier orifice de sortie et l'élément filtrant (7) pouvant être parcouru depuis un premier côté et
- en position d'auto-nettoyage, la chambre de soupape (3) pouvant être parcourue depuis l'orifice d'entrée (4) à travers l'élément filtrant (7) jusqu'au deuxième orifice de sortie (6) et l'élément filtrant (7) pouvant être parcouru depuis un deuxième côté,
**caractérisé en ce que**
l'élément filtrant (7) est disposé entre une première plaque d'étanchéité (8) mobile dans la chambre de soupape (3) et une deuxième plaque d'étanchéité (9) mobile dans la chambre de soupape (3),
- en position de filtrage, la deuxième plaque d'étanchéité (9) venant obturer le deuxième orifice de sortie (6) et
- en position d'auto-nettoyage, la première plaque d'étanchéité (8) venant obturer le premier orifice de sortie (5).

2. Soupape (1) selon la revendication 1, dans laquelle l'élément filtrant
- est disposé en position de filtrage entre l'orifice d'entrée (4) et le premier orifice de sortie (5),
- est disposé en position d'auto-nettoyage entre l'orifice d'entrée (4) et le deuxième orifice de sortie (6) et
- est mobile dans la chambre de soupape (3) pour un changement entre la position de filtrage et la position d'auto-nettoyage.

3. Soupape (1) selon l'une des revendications précédentes, dans laquelle la première plaque d'étanchéité (8), l'élément filtrant (7) et la deuxième plaque d'étanchéité (9) sont agencés entre eux de manière sensiblement rigide.

4. Soupape (1) selon l'une des revendications précédentes, dans laquelle
- en position de filtrage, l'élément filtrant (7) est rendu étanche vis-à-vis d'un boîtier de soupape (2) de la chambre de soupape (3) au moyen d'au moins un premier élément d'étanchéité (10) et la deuxième plaque d'étanchéité (9) est rendue étanche vis-à-vis du boîtier de soupape (2) au moyen d'au moins un deuxième élément d'étanchéité (11) et
- en position d'auto-nettoyage, l'élément filtrant (7) est rendu étanche vis-à-vis du boîtier de soupape (2) au moyen du au moins un deuxième élément d'étanchéité (11) et la première plaque d'étanchéité (8) est rendue étanche vis-à-vis du boîtier de soupape (2) au moyen du au moins un premier élément d'étanchéité (10).

5. Soupape (1) selon l'une des revendications précédentes, comprenant au moins un élément à ressort (12) qui pousse la première plaque d'étanchéité (8), l'élément filtrant (7) et la deuxième plaque d'étanchéité (9) dans la position de filtrage.

6. Soupape (1) selon l'une des revendications précédentes, comprenant un ensemble d'actionnement (17, 18), lequel est conçu pour commuter la soupape (1) entre la position de filtrage et la position d'auto-nettoyage.

7. Soupape (1) selon les revendications 5 et 6, dans laquelle l'ensemble d'actionnement (17, 18), lorsqu'il est actionné, déplace la première plaque d'étanchéité (8), l'élément filtrant (7) et la deuxième plaque d'étanchéité (9), contre le au moins un élément à ressort (12), dans la position d'auto-nettoyage.

8. Soupape (1) selon l'une des revendications 6 et 7, comprenant en outre un élément d'étanchéité flexible (19) pour assurer l'étanchéité de la chambre de soupape (3) vis-à-vis de l'ensemble d'actionnement (17, 18).

9. Appareil ménager (W), comprenant au moins une soupape (1) selon l'une des revendications précédentes.

10. Appareil ménager (WG) selon la revendication 9, lequel se présente sous la forme d'un sèche-linge, l'orifice d'entrée (4) étant en communication fluidique avec un bac collecteur (KW) de condensat (K).

11. Appareil ménager (WG) selon l'une des revendications 9 et 10, dans lequel le premier orifice de sortie (5) communique avec un dispositif de nettoyage (SP) destiné à nettoyer un composant disposé dans un canal d'air de traitement (PL) du sèche-linge (WG) et le deuxième orifice de sortie (6) communique avec un dispositif d'évacuation (AW) du sèche-linge (W).

12. Procédé pour faire fonctionner une soupape (1), laquelle comprend :
- une chambre de soupape (3) dotée d'un orifice d'entrée (4), d'un premier orifice de sortie (5) et d'un deuxième orifice de sortie (6),
- un élément filtrant (7) logé de manière mobile dans la chambre de soupape (3), lequel peut adopter au moins, au choix, une position de filtrage ou une position d'auto-nettoyage,
procédé dans lequel
- en position de filtrage, la soupape (1) est parcourue par un liquide (K) de telle façon que le liquide (K) traverse l'élément filtrant (7) depuis un premier côté puis sort par le premier orifice de sortie (5) et
- en position d'auto-nettoyage, la soupape (1) est parcourue par le liquide (K) de telle façon que le liquide (K) traverse l'élément filtrant (7) depuis un deuxième côté puis sort par le deuxième orifice de sortie (6),
- lors d'un changement entre la position de filtrage et la position d'auto-nettoyage, l'élément filtrant (7) étant déplacé dans la chambre de soupape (3),
**caractérisé en ce que**
- l'élément filtrant (7) est disposé entre une première plaque d'étanchéité (8) mobile dans la chambre de soupape (3) et une deuxième plaque d'étanchéité (9) mobile dans la chambre de soupape (3),
- en position de filtrage, la première plaque d'étanchéité (8) par rapport à l'orifice d'entrée (4) étant disposée en aval du premier orifice de sortie (5) et la deuxième plaque d'étanchéité (9) étant disposée de manière étanche entre l'orifice d'entrée (4) et le deuxième orifice de sortie (6),
- en position d'auto-nettoyage, la première plaque d'étanchéité (8) étant disposée de manière étanche entre l'orifice d'entrée (4) et le premier orifice de sortie (5) et la deuxième plaque d'étanchéité (9) par rapport à l'orifice d'entrée (4) étant disposée en aval du deuxième orifice de sortie (6) et
- lors d'un changement entre la position de filtrage et la position d'auto-nettoyage, les plaques d'étanchéité (8, 9) étant déplacées conjointement avec l'élément filtrant (7) dans la chambre de soupape (3).
